# EUROPÄISCHE PATENTSCHRIFT

(11) **EP 1 747 743 B1**
(45) Veröffentlichungstag und Bekanntmachung des Hinweises auf die Patenterteilung: **27.02.2008**
(21) Anmeldenummer: 05016580.2
(22) Anmeldetag: 29.07.2005
(51) Int. Cl.: A47J 31/44

(54) **Kaffeemaschine**
Coffee machine
Machine à café

(43) Veröffentlichungstag der Anmeldung: 31.01.2007
(73) Patentinhaber: WMF WÜRTTEMBERGISCHE METALLWARENFABRIK AG, 73309 Geislingen/Steige (DE)
(72) Erfinder: Göltenboth, Frank, 89134 Blaustein (DE)
(74) Vertreter: Grünecker, Kinkeldey, Stockmair & Schwanhäusser Anwaltssozietät

(56) Entgegenhaltungen:
- WO-A-02/100224
- US-A1- 2004 118 291
- US-A1- 2005 118 319

## Beschreibung

Die Erfindung bezieht sich auf eine Kaffeemaschine zum Zubereiten von heißen, milchhaltigen Getränken.

Kaffeemaschinen, die neben Brühgetränken auch Milch ausgeben, sind in großer Zahl beispielsweise aus der DE-A-44 45 436 bekannt. Die bekannte Kaffeemaschine enthält eine Aufschäumvorrichtung, mit der flüssige Frischmilch beispielsweise aus einem gesonderten Milchbehälter oder einer Handelsverpackung, wie beispielsweise die bekannten Milchkartons, mit Hilfe von eingeleiteter Luft und Dampf erwärmt und aufgeschäumt wird. Der Milchschaum wird anschließend zur Zubereitung von Capuccino verwendet. Frische, flüssige Milch ist jedoch nur begrenzt haltbar und erfordert aus hygienischen Gründen eine möglichst nicht unterbrochene Kühlkette. Da der Anteil von milchhaltigen Getränken, wie beispielsweise Capuccino, Milchkaffee, Latte Macchiato, usw. stetig zunimmt, nimmt bei vielen Betrieben, wie beispielsweise Restaurants, Cafes oder dgl. der Volumenanteil der Milch an ausgegebenen Heißgetränken bereits über 60 % ein. Die große Menge an bereitzustellender Milch schafft Probleme bei Logistik-Transport, Lagerung, Kühlung und Bereitstellung an der Kaffeemaschine, sowie zusätzliches Handling durch ständiges Emeuem der Milchpackung und Nachschubbeschaffung. Zu dem sind zusätzliche, großvolumige Kühleinrichtungen im Thekenbereich erforderlich.

Es ist mit der bekannten Kaffeemaschine jedoch auch möglich, kalte Milch aufzuschäumen oder Milch mit Hilfe des Dampfes lediglich zu erwärmen, so dass heiße Milch ausgegeben werden kann. Das Aufschäumen von kalter Milch erfordert das Einbringen einer großen Energiemenge in möglichst kurzer Zeit, wobei es physikalische Grenzen für die Erhitzungsgeschwindigkeit gibt. Diese große Energiemenge in Form von Dampf bereitzustellen, ist sehr aufwändig und erfordert einen leistungsfähigen Dampfgenerator oder Dampfkessel, da der Kundengeschmack zumindest in einigen Ländern zu einem immer größeren Anteil an Milch oder Milchschaum im Verhältnis zum Volumen des übrigen Getränks tendiert. Dadurch wird die Zubereitungszeit für heiße Milch oder heißen Milchschaum im Verhältnis zur Zubereitungszeit des Getränks immer dominierender, so dass sich die Zubereitungszeit des gesamten Getränks stark verlängert, was insbesondere im Stoßbetrieb bei Restaurants oder dgl. Probleme verursachen kann.

Aus der US 2005/0118319 ist bereits eine Getränkezubereitungsmaschine bekannt, die kondensierte Milch verwendet. Die kondensierte Milch wird mit kaltem Wasser aus der Leitung verdünnt und mit Hilfe von Dampf erhitzt und aufgeschäumt. Es besteht weiterhin eine Verbindung zu einem Heißwasserbehälter, der eine Brüheinrichtung zum Zubereiten von Brühgetränken beliefert; das Heißwasser aus dieser Verbindung wird jedoch lediglich zum Entkeimen eingesetzt.

Weiterhin ist es bei Getränkeautomaten ohne Brüheinrichtung üblich, die verwendeten Geschmackskonzentrate mit heißem Wasser aufzulösen und zu verdünnen. Derartige Automaten sind beispielsweise aus der US 2004/0118291 und der WO 02/100224 bekannt.

Der Erfindung liegt somit die Aufgabe zugrunde, eine Kaffeemaschine mit verbesserter Handhabung bereitzustellen.

Die Aufgabe wird bei einer Kaffeemaschine durch die Merkmale des Anspruches 1 gelöst.

Die Aufgabe wird bei einem Verfahren durch die Merkmale des Anspruchs 9 gelöst.

Durch die Verwendung konzentrierter Milch kann die Lagerhaltung vereinfacht, die Auswechselzyklen verkürzt und die Anforderungen an das zur Verfügung zu stellende Kühlvolumen drastisch reduziert. Zusätzlich zu diesen Vorteilen bietet die Erwärmung der konzentrierten Milch durch das Mischen dieser Milch mit Heißwasser, das von Haus aus in einer Kaffeemaschine zubereitet wird, den entscheidenden Vorteil, dass die Zeit bis zum Erreichen einer vorbestimmten Temperatur gegenüber einer Erhitzung durch Dampf entscheidend verringert werden kann, da der Mischvorgang sehr viel schneller als das Erhitzen durch Dampf vorgenommen werden kann. Die Zeitersparnis wird umso deutlicher, je größer das benötigte Volumen an heißer Milch ist.

Darüber hinaus können auch Herstellungskosten gesenkt werden, da die aufwändigen Vorkehrungen zur Dampfbereitung nicht mehr notwendig sind.

Es ist jedoch auch möglich, die konzentrierte Milch mit kaltem Wasser zu mischen und als kaltes Milchgetränk auszugeben.

So ist es ohne weiteres möglich die Mischung aus konzentrierter Milch und Heißwasser wie üblich zur Bereitung von Milchschaum aufzuschäumen.

Bevorzugt geschieht dies durch aktives Einblasen von Luft, wobei die Einblasstelle nicht kritisch ist.

Zweckmäßigerweise ist der Milchvorrat über eine lösbare Anschlussverbindung mit der Mischvorrichtung verbunden, so dass ein Austausch einfach ist und beispielsweise auch handelsübliche, bereits mit einem sterilen Anschlussschlauch versehene Behälter (z.B. Bag-in-Box-Systeme) eingesetzt werden.

Als konzentrierte Milch kann jedes handelsübliche Milchkonzentrat eingesetzt werden, bevorzugt wird jedoch eine konzentrierte Milch verwendet, die lediglich wasserreduziert ist. Dies kann durch die unterschiedlichsten Verfahren geschehen, beispielsweise nach dem in der WO-A-2004/028260 beschriebenen Verfahren oder, bevorzugt, durch ein Umkehrosmoseverfahren, wie es beispielsweise in der JP-A-8089165 beschrieben ist. Diese Verfahren können Milch bis auf 30 % Restvolumen konzentrieren, wobei im Unterschied zur Kondensmilch, keine Geschmacksbeeinträchtigungen entstehen; d.h. die konzentrierte Milch schmeckt nach dem Mischen mit Wasser wie Frischmilch.

Die Erwärmung der Milch mit Hilfe von Heißwasser hat den weiteren Vorteil, dass damit auf einfache Weise die Temperatur eingestellt und die Temperatur der ausgegebenen Milch verändert werden kann.

Die Anwesenheit von Heißwasser im Bereich der Milchzubereitung hat weiterhin den entscheidenden Vorteil, dass die Reinigung mit Heißwasser vorgenommen werden kann, wobei auf einfache und kostengünstige Weise sowohl gespült als auch zum Abtöten schädlicher Mikroorganismen erhitzt wird.

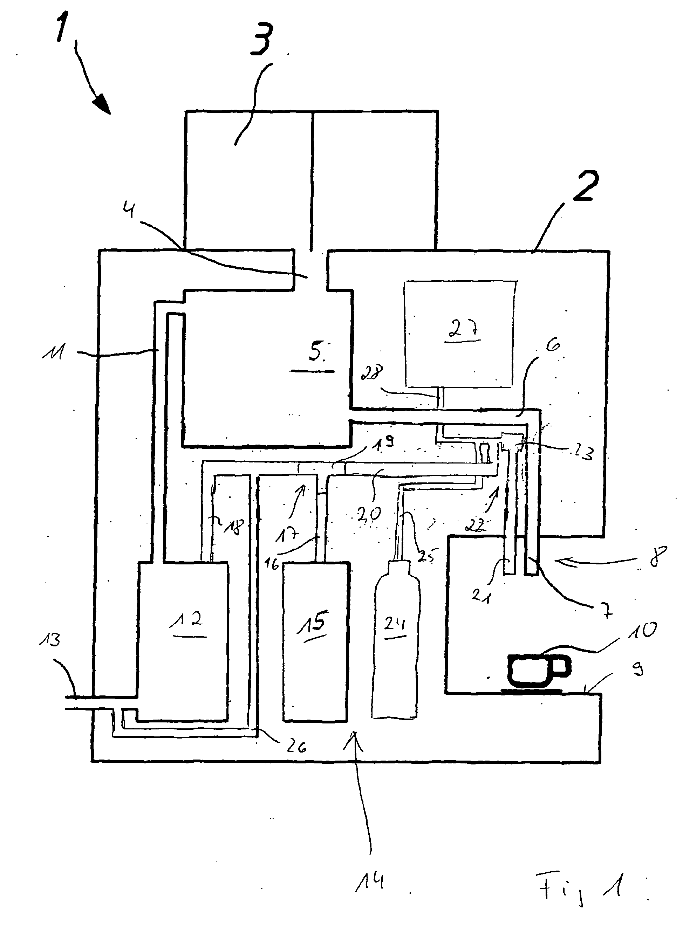

Ein Ausführungsbeispiel der Erfindung wird nachfolgend anhand der einzigen Zeichnung näher erläutert, die in stark schematisierter Darstellung eine erfindungsgemäße Kaffeemaschine 1 im Schnitt zeigt.

Die Kaffeemaschine 1 enthält ein Gehäuse 2, in dem die zum Zubereiten und Ausgeben von Brühgetränken, wie beispielsweise Kaffee oder Tee, notwendigen oder wünschenswerten, üblichen Bauteile untergebracht sind. Zur Vereinfachung der Darstellung ist lediglich ein Behälter 3 gezeigt, der den Rohstoff für Brühgetränke, wie beispielsweise Kaffeebohnen oder Kaffeemehl enthält und im dargestellten Ausführungsbeispiel oben auf dem Gehäuse 2 sitzt und über einen Einfüllschacht 4 mit einer Brüheinrichtung 5 in Verbindung steht. Die Brüheinrichtung 5 führt über eine Leitung 6 zu einem Auslass 7, der Teil einer Auslasseinrichtung 8 ist, und oberhalb einer Stellfläche 9 angeordnet ist, auf der ein zu befüllendes Gefäß 10, dargestellt ist eine Tasse, abgestellt werden kann.

Die Brüheinrichtung 5 wird über eine Leitung 11 mit Heißwasser versorgt, das in einem Heißwasserbereiter 12 zubereitet wird. Der Heißwasserbereiter 12 kann beispielsweise ein Boiler oder ein Durchlauferhitzer oder ein Heißwasserbereiter einer anderen Art sein, die für Kaffeemaschinen geeignet sind und dafür eingesetzt werden. Im dargestellten Ausführungsbeispiel wird der Heißwasserbereiter 12 über eine Leitung 13 an eine Kaltwasserversorgung angeschlossen, die beispielsweise das Wasserleitungsnetz des Gebäudes sein kann.

Die erfindungsgemäße Kaffeemaschine 1 ist weiterhin zur Ausgabe von milchhaltigen Getränken ausgelegt. Diese können Mischgetränke mit Kaffee oder Tee sein oder sie können in Form von reiner heißer oder kalter Milch ausgegeben werden. Zu diesem Zweck enthält die erfindungsgemäße Kaffeemaschine 1 eine Milchzubereitungseinrichtung 14. Die Einrichtung 14 enthält einen Milchvorrat 15, der im Inneren des Gehäuses 2 oder außerhalb angeordnet sein kann. Der Milchvorrat 15 kann eine handelsübliche Verkaufspackung sein oder kann einen gesonderten Milchbehälter umfassen, in den die Verkaufspackungen umgefüllt werden. Bevorzugt ist der Milchvorrat zur Aufnahme handelsüblicher Bag-in-Box-Systemen ausgebildet, die bereits mit einem steril verpackten Schlauch versehen sind. Der Milchvorrat 15 ist bevorzugt gekühlt.

Der Milchvorrat 15 steht über eine Milchleitung 16 mit einer Mischvorrichtung 17 in Verbindung. Die Leitung 16 kann der bereits erwähnte, sterile Schlauch oder eine installierte Leitung sein, die jedoch von der Mischvorrichtung 17 und/oder dem Milchvorrat 15 für eine intensive Reinigung lösbar sein sollte. Der Leitung 16 kann weiterhin ein nicht gezeichnetes Ventil oder ein anderes Element, beispielsweise eine Pumpe, zugeordnet sein, mit dem die Menge der vom Milchvorrat 15 zur Mischvorrichtung 17 geförderten Milch einstellbar ist. Ist die Milchzubereitungseinrichtung 14 zum Reinigen mit Heißwasser ausgelegt, so sollte der Milchvorrat 15 gegen einen Rückstau von Heißwasser absperrbar sein.

Der Milchvorrat 15 enthält konzentrierte Milch, die bevorzugt eine konzentrierte Milch ist, der lediglich ein Großteil des Wassers entzogen wurde, in der jedoch noch alle anderen Milchbestandteile im Wesentlichen vollständig enthalten sind, und die noch flüssig bzw. fließfähig ist. Geeignete Verfahren zum Herstellen derartiger, konzentrierter Milch sind z.B. in der WO-A-2004/028260 oder in der JP-A-8089165 beschrieben, wobei das Umkehrosmoseverfahren der letzteren Druckschrift besonders bevorzugt ist.

Im bevorzugten Ausführungsbeispiel ist die Mischvorrichtung 17 über eine Leitung 18 mit einem Heißwasserbereiter verbunden, der der Heißwasserbereiter 12 sein kann, der bereits zur Versorgung der Brüheinrichtung 5 in der Kaffeemaschine vorhanden ist. Auch in der Leitung 18 kann ein nicht gezeichnetes Ventil oder ein anderes Element zugeordnet sein, mit dem die Menge des der Mischvorrichtung 17 zugeleiteten, heißen Wassers auf einen vorbestimmten Wert gehalten und gegebenenfalls verändert werden kann.

Die Mischvorrichtung 17 ist im dargestellten Ausführungsbeispiel als einfacher T- bzw. Y-Verbinder 19 ausgebildet, dessen dritter Anschluss mit einer Mischleitung 20 in die Ausgabeeinrichtung 8 führt. Die Leitung 20 weist im dargestellten Ausführungsbeispiel einen eigenen Auslass 21 auf, der ebenfalls oberhalb der Stellfläche 9 angeordnet sein kann oder über eine eigenen Stellfläche ausmündet. Es ist jedoch auch möglich, die Leitung 20 in den Auslass 7 münden zu lassen.

Es ist weiterhin möglich, eine Kaltwasserleitung 26 mit der Mischeinrichtung 17 zu verbinden, so dass die konzentrierte Milch aus dem Vorrat 15 auch mit kaltem Wasser gemischt werden kann. Die Kaltwasserleitung 26 steht mit einer Kaltwasserquelle in Verbindung; im vorliegenden Ausführungsbeispiel zweigt die Kaltwasserleitung 26 vor dem Heißwasserbereiter 12 aus der Kaltwasserleitung 13 ab.

Die Leitung 20 mündet in eine der üblichen Aufschäumeinrichtungen 22, beispielsweise eine modifizierte Aufschäumeinrichtung der DE 44 45 436. Die Aufschäumeinrichtung 22 enthält eine Emulgiereinrichtung 23, die im dargestellten Ausführungsbeispiel eine Emulgierkammer mit einem gegenüber dem Leitungsquerschnitt der Leitung 20 vergrößerten Querschnitt ist, jedoch auch lediglich als Emulgierstrecke in der Leitung 20 ausgebildet sein kann. Zum Aufschäumen wird Luft entweder in üblicher Weise mittels Venturi-Prinzip angesaugt oder aktiv eingeblasen. Im dargestellten Ausführungsbeispiel wird Luft unter Druck eingeblasen, wobei zu diesem Zweck eine Druckluftquelle 24 in Form eines Druckluftbehälters vorgesehen ist, die über eine Druckluftleitung 25 mit der Emulgiereinrichtung 22 in Verbindung steht.

Mit der Emulgiereinrichtung 22 steht weiterhin im dargestellten Ausführungsbeispiel ein Dampferzeuger 27 über eine Leitung 28 in Verbindung. Im dargestellten Ausführungsbeispiel erfolgt die Anordnung der Leitung 20 von der Mischeinrichtung 17, der Druckluftleitung 25 und der Dampfleitung 28 in einer Art und Weise, wie dies in der Aufschäumeinrichtung der DE 44 45 436 der Fall ist. Mit der gezeichneten Ausführungsform kann somit auch mit kaltem Wasser gemischte, konzentrierte Milch in üblicher Weise aufgeschäumt werden, d.h. durch den vom Dampferzeuger 27 erzeugten Dampf, der über die Leitung 28 in die Emulgierkammer 23 strömt, wird die Milch-Wasser-Mischung aus der Mischvorrichtung 17 angesaugt, erwärmt und fein verteilt in die Emulgierkammer 23 eingeleitet. Dieser Vorgang wird noch durch die zum Aufschäumen verwendete Luft aus der Leitung 25 verstärkt, die stromaufwärts zur Einmündung der Leitung 20 in die Leitung 28 und stromaufwärts der Emulgierkammer 23 in die Leitung 28 mündet.

Die Dampfleitung 28 ist, wie auch die anderen Leitungen, absperrbar, wenn die konzentrierte Milch in der Mischvorrichtung 17 mit heißem Wasser gemischt und somit bereits erwärmt wurde, und ein Nacherhitzen, das gegebenenfalls durch einen Dampfstoß möglich ist, nicht erforderlich ist.

Es ist weiterhin möglich, die Druckluftleitung 25 direkt an oder vor der Emulgierkammer 23 in die Leitung 20 einmünden zu lassen. Eine weitere Möglichkeit besteht darin, die zum Aufschäumen notwendige Luft bereits dem Heiß- oder Kaltwasser in den Leitungen 18 bzw. 26, der Mischvorrichtung 17 oder der konzentrierten Milch in der Leitung 16 hinzuzufügen.

Wird die Ausgabe eines milchhaltigen Getränks gewünscht, so wird aus dem Milchvorrat 15 eine zur Zubereitung der gewünschten Ausgabemenge bei der gewünschten Ausgabetemperatur ausreichende Menge konzentrierter Milch in die Mischvorrichtung 17 eingeleitet. Gleichzeitig wird eine zur Zubereitung der gewünschten Ausgabemenge bei der gewünschten Temperatur ausreichende Menge Heißwasser aus dem Heißwasserbereiter 12 über die Leitung 18 in die Mischvorrichtung 17 eingeleitet. Dort wird die konzentrierte Milch mit dem Heißwasser gemischt und anschließend über die Leitung 20 entweder durch Zumischen von Luft aufgeschäumt oder nichtaufgeschäumt aus dem Auslass 21 ausgegeben. Die nachfolgende Tabelle I zeigt Berechnungsbeispiele für die Ausgabetemperatur bei Verwendung von Heißwasser.

**Tabelle I**

| | | | | |
|---|---|---|---|---|
| **Beispiel** | **Milch-Konzentrat Vol.Anteil** | **Temp.Konzentrat °C** | **Temp.Heißwasser °C** | **Temp.Ausgabe °C** |
| 1 | 30% | 4 | 97 | 69,1 |
| 2 | 35% | 25 | 98 | 72,5 |
| 3 | 40% | 25 | 98 | 68,8 |

| | | | | |
|---|---|---|---|---|
| (Annahme: Wärmekapazität ist ähnlich Wasser) | | | | |

Die gewünschte Ausgabetemperatur für heiße Milch bzw. Milchschaum liegen zwischen 65 und 72°C. Obenstehende Tabelle zeigt, dass diese Temperaturen durch dieses Verfahren mit gängigen Konzentrationsstufen gekühlter oder ungekühlter Milch erreichbar sind. Beispiel 1: 30% Vol.Anteil Milchkonzentrat mit 4°C gemischt mit 70% Vol.Anteil Heißwasser mit 97°C ergeben eine Ausgabetemperatur von ca. 69°C.

Soll kalte Milch ausgegeben werden, so wird wiederum die der Ausgabemenge entsprechende Menge konzentrierter Milch aus dem Vorrat 15 in die Mischvorrichtung 17 und eine für die gewünschte Ausgabemenge ausreichende Menge Kaltwasser über die Leitung 26 in die Mischvorrichtung 17 eingeleitet. Dort wird die konzentrierte Milch mit dem Kaltwasser gemischt und gelangt über die Leitung 20 zum Auslass 21. Die mit Kaltwasser gemischte, konzentrierte Milch kann entweder ohne Aufschäumung ausgegeben werden oder sie wird durch das Einleiten von Luft, beispielsweise das Einblasen von Druckluft über die Leitung 25 und das Einleiten von Dampf über die Leitung 28 in einer Weise erwärmt und aufgeschäumt, wie dies auch bei nicht konzentrierter Frischmilch möglich ist und durchgeführt wird.

Von besonderem Vorteil ist es, dass die Milchbereitungseinrichtung 14 der erfindungsgemäßen Kaffeemaschine 1 mit Heißwasser gespült werden kann, da bei der erfindungsgemäßen Kaffeemaschine 1 alle milchführenden Leitungen und Einrichtungen, und vor allen Dingen auch die Aufschäumeinrichtung 22, mit dem Heißwasserbereiter 12 verbunden sind. Ein Durchspülen mit heißem Wasser bewirkt sowohl eine effektive mechanische Ausspülung von Milchresten, das Lösen fetthaltiger Bestandteile oder eine thermische Behandlung zur Verringerung eventueller bakterieller Belastungen.

## Patentansprüche

1. Kaffeemaschine (1) zum Zubereiten von heißen, milchhaltigen Getränken, mit einer Brüheinrichtung (5), einem Heißwasserbereiter (12) zur Versorgung der Brüheinrichtung (5), einem Milchvorrat (15) zur Aufnahme von konzentrierter flüssiger Milch, und einer über eine Milchleitung (16) mit dem Milchvorrat (15) und eine Heißwasserleitung (18) mit dem Heißwasserbereiter (12) verbundenen Mischvorrichtung (17) zum Mischen der konzentrierten Milch mit Heißwasser aus dem Heißwasserbereiter (12) zum Erwärmen der Milch, sowie mit einer Ausgabeeinrichtung (8).

2. Kaffeemaschine nach Anspruch 1, **dadurch gekennzeichnet, dass** die Kaffeemaschine eine Kaltwasserquelle (13) enthält und die Mischvorrichtung (17) mit der Kaltwasserquelle (13) zum Mischen der konzentrierten Milch mit Kaltwasser verbunden ist.

3. Kaffeemaschine nach Anspruch 1 oder 2, **dadurch gekennzeichnet, dass** eine Aufschäumeinrichtung (22) mit einer Emulgiereinrichtung (23) zum Bereiten von Milchschaum durch Einbringen von Luft vorgesehen ist, wobei die Emulgiereinrichtung (23) zwischen der Mischvorrichtung (17) und der Ausgabeeinrichtung (8) angeordnet ist.

4. Kaffeemaschine nach Anspruch 3, **dadurch gekennzeichnet, dass** die Aufschäumeinrichtung (22) mit einem Dampferzeuger (27) in Verbindung steht.

5. Kaffeemaschine nach Anspruch 3 oder 4, **dadurch gekennzeichnet, dass** die Aufschäumeinrichtung (22) eine Einrichtung (24) zum Einblasen von Luft unter Druck in die Milch-Wasser-Mischung und/oder eine Einrichtung zum Einblasen von Luft unter Druck in das Wasser und/oder eine Einrichtung zum Einblasen von Luft unter Druck in die konzentrierte Milch und/oder eine Einrichtung zum Einblasen von Luft unter Druck in Dampf enthält.

6. Kaffeemaschine nach einem der Ansprüche 1 bis 5, **dadurch gekennzeichnet, dass** die Mischvorrichtung (17) eine lösbare Anschlussverbindung zum Milchvorrat (15) enthält.

7. Kaffeemaschine nach einem der Ansprüche 1 bis 6, **dadurch gekennzeichnet, dass** die Mischvorrichtung (17) einen T- oder Y-Verbinder (19) enthält, der mit dem Milchvorrat (15), dem Heißwasserbereiter (12) und einer Kaltwasserquelle (13) und der Ausgabeeinrichtung (8) verbunden ist.

8. Kaffeemaschine nach einem der Ansprüche 1 bis 7, **dadurch gekennzeichnet, dass** die konzentrierte Milch eine, bevorzugt durch Umkehrosmose, wasserreduzierte, flüssige Milch ist.

9. Verfahren zum Zubereiten von heißen, milchhaltigen Getränken in einer Kaffeemaschine (1), mit einer Brüheinrichtung (5) und einem Heißwasserbereiter (12) zur Versorgung der Brüheinrichtung (5), wobei konzentrierte Milch mit Wasser gemischt und dadurch erwärmt wird, **dadurch gekennzeichnet, dass** die konzentrierte Milch mit Heißwasser aus einem Heißwasserbereiter (12) der Kaffeemaschine (1) gemischt und dadurch erwärmt wird.

10. Verfahren nach Anspruch 9, **dadurch gekennzeichnet, dass** konzentrierte Milch und Heißwasser in einem vorbestimmten Mischungsverhältnis gemischt werden und das Mischungsverhältnis zum Einstellen einer vorbestimmten Ausgabetemperatur der Milch-Heißwasser-Mischung veränderbar ist.

11. Verfahren nach Anspruch 9 oder 10, **dadurch gekennzeichnet, dass** als konzentrierte Milch eine, bevorzugt durch Umkehrosmose, wasserreduzierte, flüssige Milch verwendet wird.

12. Verfahren nach einem der Ansprüche 9 bis 11, **dadurch gekennzeichnet, dass** nach dem Zubereiten des milchhaltigen Getränks mit Heißwasser gespült wird.

## Claims

1. Coffee machine (1) for preparing hot, milk-containing drinks, having a boiling device (5), a hot-water preparer (12) for supplying the boiling device (5), a milk supply (15) for receiving concentrated liquid milk, and a mixing device (17) connected via a milk pipe (16) to the milk supply (15) and a hot-water pipe (18) to the hot-water preparer (12) for mixing the concentrated milk with hot water from the hot-water preparer (12) for heating the milk, and having a serving device (8).

2. Coffee machine according to claim 1, **characterised in that** the coffee machine contains a cold-water source (13) and the mixing device (17) is connected to the cold-water source (13) for mixing the concentrated milk with cold water.

3. Coffee machine according to claim 1 or 2, **characterised in that** a frothing device (22) is provided with an emulsifying device (23) for preparing milk froth by introducing air, wherein the emulsifying device (23) is arranged between the mixing device (17) and the serving device (8).

4. Coffee machine according to claim 3, **characterised in that** the frothing device (22) is connected to a steam boiler (27).

5. Coffee machine according to claim 3 or 4, **characterised in that** the frothing device (22) contains a device (24) for blowing air under pressure into the milk-water mixture and/or a device for blowing air under pressure into the water and/or a device for blowing air under pressure into the concentrated milk and/or a device for blowing air under pressure into steam.

6. Coffee machine according to one of claims 1 to 5, **characterised in that** the mixing device (17) contains a releasable connection to the milk supply (15).

7. Coffee machine according to one of claims 1 to 6, **characterised in that** the mixing device (17) contains a T-connector or Y-connector (19), which is connected to the milk supply (15), the hot-water preparer (12) and a cold-water source (13) and the serving device (8).

8. Coffee machine according to one of claims 1 to 7, **characterised in that** the concentrated milk is a liquid milk which is water-reduced, preferably by reverse osmosis.

9. Process for preparing hot, milk-containing drinks in a coffee machine (1), having a boiling device (5) and a hot-water preparer (12) for supplying the boiling device (5), wherein concentrated milk is mixed with water and thus heated, **characterised in that** the concentrated milk is mixed with hot water from a hot-water preparer (12) of the coffee machine (1) and thus heated.

10. Process according to claim 9, **characterised in that** concentrated milk and hot water are mixed in a predetermined mixing ratio and the mixing ratio can be changed to set a predetermined serving temperature of the milk-hot water mixture.

11. Process according to claim 9 or 10, **characterised in that** a liquid milk which is water-reduced, preferably by reverse osmosis, is used as the concentrated milk.

12. Process according to one of claims 9 to 11, **characterised in that** after preparing the milk-containing drink, rinsing is carried out using hot water.

## Revendications

1. Machine à café (1) pour la préparation de boissons chaudes, contenant du lait, avec un dispositif à infusion (5), un dispositif de préparation d'eau chaude (12) pour alimenter le dispositif à infusion (5), une réserve de lait (15) pour recueillir le lait liquide concentré, et un dispositif de mélange (17), relié à la réserve de lait (15) par une conduite de lait (16) et au dispositif de préparation d'eau chaude (12) par une conduite d'eau chaude (18), pour mélanger le lait concentré avec l'eau chaude provenant du dispositif d'eau chaude (12) pour réchauffer le lait, ainsi qu'avec un dispositif de sortie (8).

2. Machine à café selon la revendication 1, **caractérisée en ce que** la machine à café comprend une source d'eau froide (13) et le dispositif de mélange (17) est relié à la source d'eau froide (13) pour mélanger le lait concentré avec l'eau froide.

3. Machine à café selon la revendication 1 ou 2, **caractérisée en ce qu'**un dispositif de moussage (22) est prévu avec un dispositif à émulsionner (23) pour préparer de la mousse de lait en introduisant de l'air, le dispositif à émulsionner (23) étant disposé entre le dispositif de mélange (17) et le dispositif de sortie (8).

4. Machine à café selon la revendication 3, **caractérisée en ce que** le dispositif à émulsionner (22) est en liaison avec un générateur de vapeur (27).

5. Machine à café selon la revendication 3 ou 4, **caractérisée en ce que** le dispositif à émulsionner (22) comprend un dispositif (24) pour insuffler de l'air sous pression dans le mélange lait-eau et/ou un dispositif pour insuffler de l'air sous pression dans l'eau et/ou un dispositif pour insuffler de l'air sous pression dans le lait concentré et/ou un dispositif pour insuffler de l'air sous pression dans la vapeur.

6. Machine à café selon l'une des revendications 1 à 5, **caractérisée en ce que** le dispositif de mélange (17) comprend une liaison par raccord détachable vers la réserve de lait (15).

7. Machine à café selon l'une des revendications 1 à 6, **caractérisée en ce que** le dispositif de mélange (17) comprend un raccord en T ou en Y (19) qui est relié à la réserve de lait (15), au dispositif de préparation d'eau chaude (12) et à une source d'eau froide (13) et au dispositif de sortie (8).

8. Machine à café selon l'une des revendications 1 à 7, **caractérisée en ce que** le lait concentré est un lait liquide réduit en eau, de préférence par osmose inverse.

9. Procédé pour préparer des boissons chaudes, contenant du lait dans une machine à café (1), avec un dispositif à infusion (5) et un dispositif de préparation d'eau chaude (12) pour alimenter le dispositif à infusion (5), dans lequel du lait concentré est mélangé avec l'eau et est ainsi chauffé, **caractérisé en ce que** le lait concentré est mélangé avec de l'eau chaude provenant du dispositif de préparation d'eau chaude (12) de la machine à café (1) et est ainsi chauffé.

10. Préparation selon la revendication 9, **caractérisée en ce que** le lait concentré et l'eau chaude sont mélangés dans une proportion de mélange prédéterminée et la proportion de mélange peut être modifiée pour régler une température de sortie prédéterminée du mélange lait-eau chaude.

11. Procédé selon les revendications 9 ou 10, **caractérisé en ce qu'**un lait liquide réduit en eau, de préférence par osmose inverse, est utilisé comme lait concentré.

12. Procédé selon l'une des revendications 9 à 11, **caractérisé en ce que**, après la préparation de la boisson contenant du lait, a lieu un rinçage à l'eau chaude.
